# EUROPÄISCHE PATENTSCHRIFT

(11) **EP 0 568 793 B1**
(45) Veröffentlichungstag und Bekanntmachung des Hinweises auf die Patenterteilung: **05.06.1996**
(21) Anmeldenummer: 93103806.1
(22) Anmeldetag: 10.03.1993
(51) Int. Cl.: B60N 2/24, B60N 2/12

(54) **Fondsitzanordnung für Omnibusse**
Rear seat arrangement for omnibus
Agencement de sièges arriére pour omnibus

(30) Priorität: 09.04.1992 DE 4211921
(43) Veröffentlichungstag der Anmeldung: 10.11.1993
(73) Patentinhaber: MERCEDES-BENZ AG, D-70327 Stuttgart (DE)
(72) Erfinder: Mühlhausen, Mark, W-7000 Stuttgart 1 (DE); Hienz, Johann, W-7030 Böblingen (DE); Hochrathner, Alfred, W-7030 Böblingen (DE)

(56) Entgegenhaltungen:
- EP-A- 0 229 625
- EP-A- 0 260 631
- EP-A- 0 476 253
- DE-A- 2 911 027
- DE-A- 3 534 689
- FR-A- 2 424 167
- PATENT ABSTRACTS OF JAPAN vol. 16, no. 405 (M-1301)26. August 1992 & JP-A-04 135 924 (SAKANE KATSUMI) *
- PATENT ABSTRACTS OF JAPAN vol. 16, no. 538 (M-1335)9. November 1992 & JP-A-04 201 633 (AOKI HIKEDI) *

## Beschreibung

Die Erfindung betrifft eine Fondsitzanordnung für Omnibusse gemäß dem Oberbegriff des Patentanspruchs 1.

Die Straßenverkehrszulassungsordnung fordert für Reisebusse, daß das Heckfenster als Notausstieg so ausgelegt werden muß, daß ein zylindrischer Prüfkörper mit einem Durchmesser von 550 mm und einer Länge von 1400 mm durch die vorhandene Öffnung aus dem Omnibus befördert werden kann. In der Regel stehen die Rückenlehnen der Fondsitze über die Unterkante des Heckfensters über und verkleinern somit die als Notausstieg vorgeschriebene Öffnung. Um trotzdem den Anforderungen für den Notaustieg gerecht zu werden, sind Sitzkonstruktionen entwickelt worden, die ein Entfernen der Rückenlehnenüberstände aus der Fensteröffnung ermöglichen.

Bei einer Fondsitzanordnung der eingangs genannten Art ist hierzu der Sitzrahmen eines jeden Fondsitzes in Längsschienen am Fahrzeugboden und die Rückenlehne in einer an der Rückwand des Fahrzeugs befestigten Kulisse geführt. Wird das Sitzkissen nach vorn gezogen, so wird das Unterteil der Rückenlehne dadurch nach vorn verlagert und die Rückenlehne gleitet in der Kulisse geführt aus ihrer Steilstellung in eine mehr horizontale Erstreckung, wobei ihre Oberkante unter die Unterkante der Fensteröffnung des Heckfensters abtaucht. Dadurch wird die Fensteröffnung vollständig freigegeben und steht als zugelassener Notausstieg zur Verfügung.

Eine ähnliche Sitzkonstruktion ist aus Schienenfahrzeugen bekannt (DE 20 54 817 A1), bei welcher zwecks Umwandlung des Sitzes in eine Liegefläche am unteren Ende des Rückenlehnenrahmens ein Steuerzapfen angeordnet ist, der in einer unterhalb der Sitzrahmen-Schienenführung schräg abwärts zu dieser liegend verlaufenden Schienenführung läuft.

Die vorstehend beschriebenen bekannten Sitzkonstruktionen haben den Nachteil, daß sie abhängig sind von den Einbauverhältnissen im Fahrzeug und damit nicht für alle Omnibustypen und auch nicht für Sitze mit Einstellmöglichkeit für die Rückenlehnenneigung geeignet sind. Das Vorsehen von mit der Fahrzeugkarosserie verbundenen Kulissenführungen erschwert und verlängert zudem die Fahrzeugendmontage. Außerdem muß jeder einzelne Sitz betätigt werden, was große Rüstzeiten bis zum Beginn einer Bergungsaktion im Notfall mit sich bringt.

Der Erfindung liegt die Aufgabe zugrunde, eine Fondsitzanordnung der eingangs genannten Art zu schaffen, die unabhängig von den Einbauverhältnissen in den Fahrzeugen ist und bei welcher die mindestens zwei, vorzugsweise alle Fondsitze der Fondsitzanordnung mit einem einzigen Handgriff gleichzeitig in die den Notausstieg freigegebende Vorverlagerungsposition überführt werden können.

Die Aufgabe ist bei einer Fondsitzanordnung der im Oberbegriff des Anspruchs 1 definierten Gattung erfindungsgemäß durch die Merkmale im Kennzeichenteil des Anspruchs 1 gelöst.

Die erfindungsgemäße Fondsitzanordnung hat den Vorteil, daß mittels des einen vorgesehenen Handgriffs mit einer einzigen Betätigungsbewegung, nämlich Anheben und Ziehen in Fahrtrichtung des Omnibusses, alle Sitzkissen der Fondsitze zusammen nach vorn gezogen werden, um so den erforderlichen Freiraum zum Wegklappen der Rückenlehnen zu schaffen, und gleichzeitig alle Rückenlehnen mindestens soweit nach hinten geneigt werden, daß sie aus der Öffnung des Heckfensters ausgeschwenkt sind. Damit sind die Rüstzeiten zur Freigabe des Notausstiegs extrem kurz. Alle Elemente zur Zwangsbewegung der Rückenlehne sind an dem Sitzkissenrahmen bzw. an der fahrzeugfesten Schienenführung der Sitzkissenrahmen befestigt. Die für jeden Fondsitz vorgesehenen zwei Führungsschienen sind miteinander zu einer Baueinheit verbunden, so daß sie mit nur wenigen Handgriffen im Fahrzeug montiert werden können. Die Zeit für die Endmontage der Fondsitzanordnung wird damit erheblich verkürzt.

Vorteilhafte Ausführungsformen der erfindungsgemäßen Fondsitzanordnung mit zweckmäßigen Weiterbildungen und Ausgestaltungen der Erfindung sind in den weiteren Patentansprüchen angegeben.

Das Hebelgestänge zur Zwangsbetätigung der Rückenlehne ist fertigungstechnisch sehr einfach zu realisieren, wenn gemäß einer zweckmäßigen Ausführungsform der Erfindung zwei zweiarmige Hebel vorgesehen werden, die jeweils am in Fahrtrichtung gesehen vorderen und hinteren Ende des Sitzkissenrahmens schwenkbar gehalten sind. Der eine Hebelarm des hinteren Hebels ist dabei fest mit der Rückenlehne und der eine Hebelarm des vorderen Hebels gelenkig mit der Führungsstange verbunden. Die beiden anderen beiden Hebelarme sind über eine angelenkte Koppelstange miteinander verbunden.

Die Auslösung des Schwenkmechanismus für die Rückenlehne läßt sich aus der Verschiebebewegung des Sitzkissenrahmens in einfacher Weise dadurch ableiten, daß gemäß einer bevorzugten Ausführungsform der Erfindung die Führungsstange einen quer abstehenden Führungsbolzen trägt, der in einer sitzkissenrahmenfesten, sich in Verschieberichtung des Sitzkissenrahmens erstreckende Kulisse geführt und in der Sitzgebrauchsposition am in Fahrtrichtung gesehen vorderen Kulissenende liegend in der Kulisse gegen Verschiebung gesperrt ist. Im Verschiebeweg des Sitzkissenrahmens ist ein fahrzeugfester Anschlag so angeordnet, daß nach einem vorgegebenen Verschiebeweg des Sitzkissenrahmens in Fahrtrichtung die Sperrung des Führungsbolzens der Kulisse aufgehoben und der Führungsbolzen am Anschlag gegen Verschiebung festgelegt ist. Die Sperrung des Führungsbolzens erfolgt dabei bevorzugt durch eine Blattfeder, die den Führungszapfen in eine am vorderen Ende der Kulisse ausgebildeten Nut hineindrückt. Zum Ausheben des Führungsbolzens weist der Anschlag eine Auflaufschräge auf, durch welche der Führungsbolzen gegen die Kraft der Blattfeder soweit angehoben wird, daß er in den in Verschieberichtung des Sitzkissenrahmens sich erstreckenden langgestreckten Teil der Kulisse einläuft.

Alternativ kann die Führungsstange auch gemäß einer weiteren Ausführungsform der Erfindung mit einem quer abstehenden Führungszapfen in einem fahrzeugfesten Längsschlitz, der sich parallel zur Schienenführung erstreckt, verschieblich geführt sein. Der Längsschlitz ist so bemessen, daß nach einem vorgegebenen Verschiebeweg des Sitzkissenrahmens in Fahrtrichtung der Fahrzeugzapfen an dem in Fahrtrichtung gesehen vorderen Ende des Längsschlitzes anschlägt.

Eine solche Lösung wird bevorzugt insbesondere dann eingesetzt, wenn Sitzkissen und Rückenlehne in der Sitzgebrauchsposition nicht starr miteinander verbunden sind, sondern die Fondsitze so ausgebildet sind, daß der Anstellwinkel der Rückenlehne zum Sitzkissen in einem vorgegebenen Winkelbereich eingestellt werden kann. In diesem Fall wird die Ausbildung und Zuordnung von Führungsstange und Führungsschlitz so getroffen, daß in einer Sitzgebrauchsstellung, in welcher das in Fahrtrichtung gesehen hintere Sitzkissenende nächstmöglich zur Fahrzeugrückwand liegt und die Rückenlehne am steilsten angestellt ist, der Führungszapfen noch nicht oder gerade eben an dem hinteren Ende des Längsschlitzes anliegt. Zusätzlich greift am vorderen zweiarmigen Hebel des Hebelgestänges zwischen dessen Schwenklagerpunkt und dem Anlenkpunkt der Führungsstange ein in Sitzkissenverschieberichtung verstellbares Einstellglied an. Bevorzugt wird dabei der Ausschiebekolben einer Gasfeder als ein solches Einstellglied verwendet, wobei die Gasfeder so eingebaut ist, daß beim Auslösen der Gasfeder und der dadurch bedingten Längsverschiebung eines Befestigungsabschnitts der Gasfeder die Rückenlehne aufgerichtet wird. Das Absenken der Rückenlehne erfolgt bei entsperrter Gasfeder durch vom Sitzbenutzer auf die Anlehnfläche der Rückenlehne ausgeübten Druck.

Gemäß einer bevorzugten Ausführungsform der Erfindung weist jede Arretiervorrichtung zur ortsfesten Verriegelung des Sitzkissenrahmens eine parallel zu der Schienenführung sich erstreckende, sitzkissenrahmenfeste Verriegelungsleiste auf, die mindestens in der Sitzgebrauchsposition fahrzeugfest verriegelbar ist. Der Handgriff ist als eine quer zur Verschieberichtung der Fondsitze über deren Gesamtbreite sich erstreckende Griffstange ausgebildet, die starr oder koppelbar mit den Verriegelungsleisten verbunden ist.

Bei Fondsitzen mit in Sitzgebrauchsposition fester Rückenlehnenanbindung ist dabei die Griffstange mit allen Verriegelungsleisten der Fondsitze fest verbunden. Durch Anheben der Griffstange werden alle Arretiervorrichtungen gelöst und durch Ziehen an der Griffstange alle Sitzkissenrahmen der Fondsitze über ihre Verriegelungsleisten nach vorn gezogen.

Bei Fondsitzen mit in der Neigung zum Sitzkissen einstellbarer Rückenlehne ist die Griffstange an mindestens zwei in Grenzen schwenk- und längsverschieblichen fahrzeugfesten Längsträgern starr befestigt. An den beiden sich in Sitzverschieberichtung im Parallelabstand zueinander erstreckenden Längsträgern ist eine über die Gesamtbreite der Fondsitze verlaufende Riegelstange befestigt. An jeder Verriegelungsleiste ist ein Verbindungshebel befestigt, der am Betätigungshebel für die Rückenlehnenneigungseinstellung angelenkt ist. Durch Anheben der Griffstange werden alle Arretiervorrichtungen gelöst und über die Verbindungshebel auch alle Betätigungshebel betätigt, so daß alle Gasfedern entsperrt sind. Durch Ziehen an der Griffstange wird die Riegelstange nach vorn gezogen und zieht ihrerseits, nachdem sie in alle Verriegelungshaken, die am vorderen Ende der Verriegelungsleisten vorgesehen sind, eingefallen ist, alle Sitzkissenrahmen über die Verriegelungsleisten mit sich, wobei die Rückenlehnen bei entsperrten Gasfedern zwangsweise abgeschwenkt werden.

Die Erfindung ist anhand von in der Zeichung dargestellten Ausführungsbeispielen im folgenden näher beschrieben. Es zeigen:
- Fig. 1: eine Seitenansicht einer Fondsitzanordnung für einen Reisebus, schematisch dargestellt,
- Fig. 2: eine Draufsicht auf die Fondsitzanordnung in Fig. 1,
- Fig. 3 und 4: jeweils eine Prinzipskizze zur Erläuterung der Funktionsweise des Hebelgestänges an den Fondsitzen in Fig. 1 und 2 in zwei verschiedenen Verschiebepositionen,
- Fig. 5: ausschnittweise eine Seitenansicht einer konstruktiven Ausführung eines Fondsitzes der Fondsitzanordnung in Fig. 1 und 2,
- Fig. 6: eine Ansicht des Fondsitzes in Richtung Pfeil VI in Fig. 5,
- Fig. 7: ausschnittweise eine Seitenansicht einer konstruktiven Ausführung eines Fondsitzes für eine Fondsitzanordnung gemäß einem weiteren Ausführungsbeispiel,
- Fig. 8: eine Ansicht des Fondsitzes in Richtung Pfeil VIII in Fig. 7,
- Fig. 9: eine Draufsicht des Fondsitzes in Fig. 8.

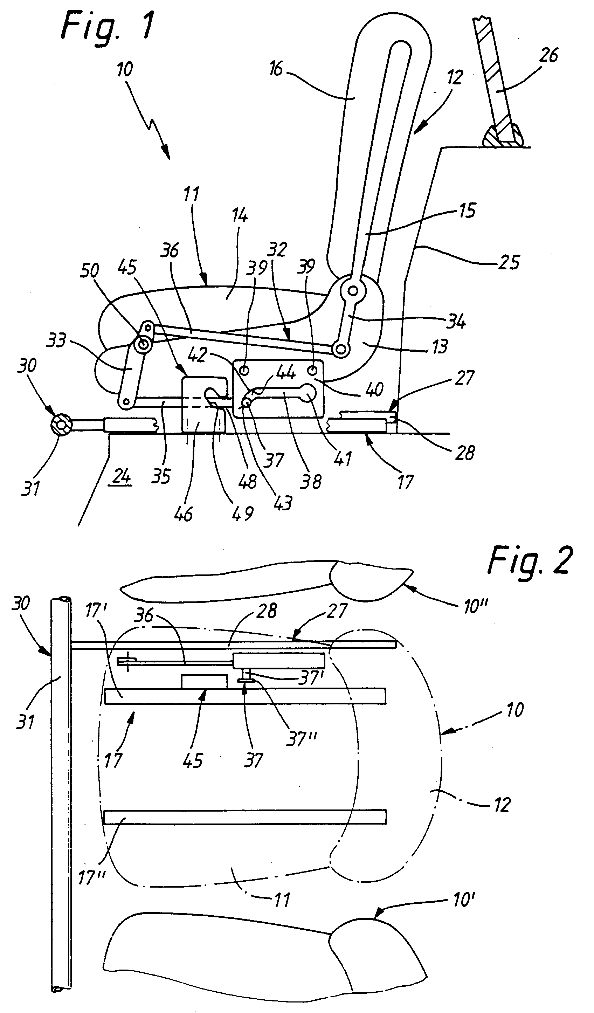

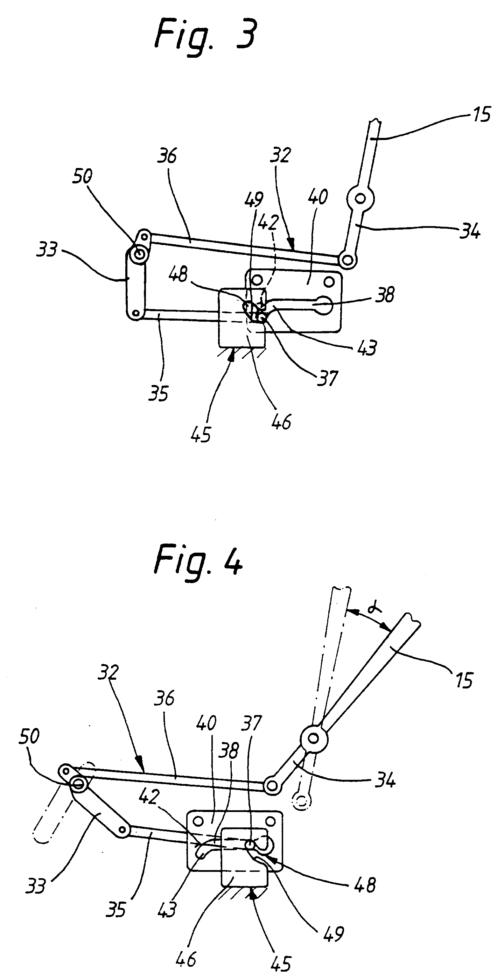

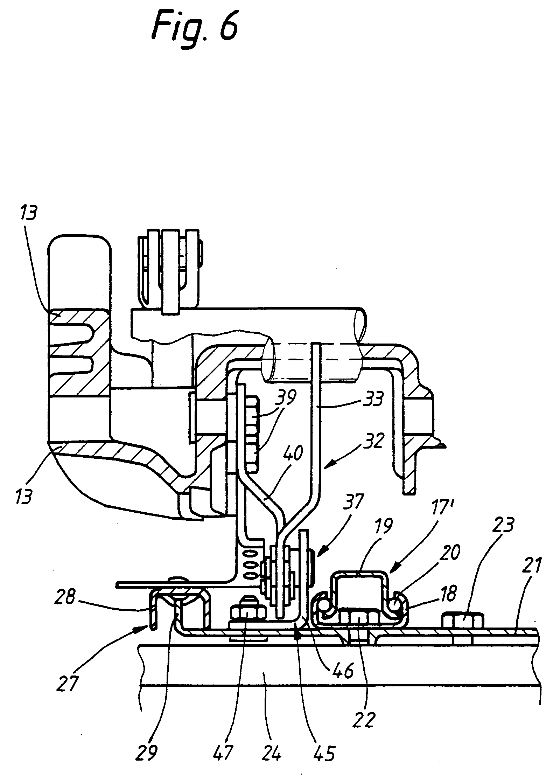

Die in Fig. 1 in Seitenansicht und in Fig. 2 in Draufsicht schematisch skizzierte Fondsitzanordnung für einen Reisebus weist mehrere, quer zur Fahrtrichtung nebeneinander angeordnete Fondsitze 10 (Fig. 1) bzw. 10, 10' und 10'' (Fig. 2) auf. Jeder Fondsitz 10 besteht in bekannter Weise aus einem Sitzkissen 11 und einer Rückenlehne 12. Das Sitzkissen 11 weist einen Sitzkissenrahmen 13 und ein darauf gehaltenes Sitzkissenpolster 14 und die Rückenlehne 12 einen Rückenlehnenrahmen 15 und ein von diesem aufgenommenes Rückenlehnenpolster 16 auf. Der Sitzkissenrahmen 13 ist in einer fahrzeugfesten Schienenführung 17, bestehend aus zwei Längsschienen 17' und 17'' (Fig. 2),in Fahrzeuglängsrichtung verschieblich gehalten. In Fig. 6 ist die eine Längsschiene 17' in ihrer konstruktiven Ausführung zu sehen. Die Längsschiene 17' besteht dabei aus einer fahrzeugfesten Unterschiene 18 und einer sitzkissenrahmenfesten Oberschiene 19, die über ein Kugellager 20 in der Unterschiene 18 geführt ist. Wie aus Fig. 6 in Verbindung mit Fig. 2 ersichtlich, sind die beiden Unterschienen 18 im Abstand voneinander auf einem Sitzunterrahmen 21 mittels Schrauben 22 befestigt, der seinerseits durch Schrauben 23 am Fahrzeugboden 24 verankert ist. Die Verankerung erfolgt dabei dergestalt, daß, wie in Fig. 1 skizziert ist, das Sitzkissen 11 der in ihrer Gebrauchsstellung sich befindlichen Fondsitze 10 mit seinem in Fahrtrichtung gesehen hinteren Ende sehr dicht an die Fahrzeugrückwand 25 heranreicht und die Rückenlehne 12 über die Unterkante des mit 26 bezeichneten Heckfensters in die Heckfensteröffnung hinein emporsteht. In dieser Sitzposition ist jeder Fondsitz 10 durch eine Arretiervorrichtung 27 gegen axiale Verschiebung arretiert.

Die in Fig. 1 und 2 nur schematisch angedeutete und in Fig. 6 im Querschnitt zu sehende Arretiervorrichtung 27 weist eine am Sitzkissenrahmen 13 befestigte Verriegelungsleiste 28 auf, die sich nahe der Längsschiene 17' der Schienenführung 17 parallel zu dieser erstreckt. Die Verriegelungsleiste 28 übergreift eine am Sitzunterrahmen 21 seitlich emporstehende Zahnleiste 29 und wirkt mit dieser derart zusammen, daß der Sitzkissenrahmen 13 in verschiedenen Verschiebepositionen längs der Schienenführung 17 mindestens aber in der in Fig. 1 skizzierten Sitzgebrauchsposition ortsfest verriegelt werden kann. Durch Anheben der Verriegelungsleiste 28 kann diese außer Eingriff mit der Zahnleiste 29 gebracht und so der Sitzkissenrahmen 13 in der Schienenführung 17 verschoben werden. Zum gleichzeitigen Lösen aller Arretiervorrichtungen 27 und zum gleichzeitigen Verschieben aller Sitzkissenrahmen 13 der Fondsitze 10 bzw. 10,10',10'' ist - wie in Fig. 1 und 2 angedeutet - ein Handgriff 30 vorgesehen, der als eine Griffstange 31 ausgebildet ist, die sich über die gesamte, quer zur Fahrtrichtung gesehene Breite der Fondsitzanordnung erstreckt und an jeder Verriegelungsleiste 28 an den Fondsitzen 10,10',10'' an deren in Fahrtrichtung gesehen vorderem Ende befestigt ist. Wird die Griffstange 31 angehoben, so kommen Verriegelungsleisten 28 und Zahnleisten 29 der Arretiervorrichtungen 27 an den Fondsitzen 10, 10',10'' außer Eingriff, und durch Ziehen an der Griffstange 31 können über die Verriegelungsleisten 28 alle Sitzkissenrahmen 13 nach vorn, weg von der Fahrzeugrückwand 25 bewegt werden.

Durch das Vorziehen der Sitzkissen 11 der Fondsitze 10,10',10'' wird hinter diesen zur Fahrzeugrückwand 25 hin soviel Freiraum geschaffen, daß die schwenkbeweglich am Sitzkissen 11 gehaltenen Rückenlehnen 12 in Richtung einer mehr horizontalen Erstreckung soweit zurückgeschwenkt werden können, daß der Oberteil der Rückenlehne 12 aus der Öffnung des Heckfensters 26 ausschwenkt und unterhalb der Fensterunterkante liegt. Dadurch ist die gesamte Öffnung des Heckfensters 26 freigegeben und kann als Notausstieg verwendet werden.

Die Rückenlehne 12 ist über ein Hebelgestänge 32 so mit dem Sitzkissen 11 verbunden, daß bei der Sizkissenvorverlagerung die Rückenlehne 12 zwangsweise in die beschriebene, mehr horizontale Erstreckung in Richtung unter das Heckfenster 26 hin abgeklappt wird. Hierzu weist das Hebelgestänge 32 zwei am Sitzkissenrahmen 13 schwenkbar gelagerte zweiarmige Hebel 33,34 auf, von denen der eine Hebel 33 am in Fahrtrichtung gesehen vorderen und der andere Hebel 34 am hinteren Ende des Sitzkissens 11 angeordnet ist. Der obere Hebelarm des hinteren Hebels 34 ist fest mit dem Rückenlehnenrahmen 15 verbunden, während der untere Hebelarm des vorderen zweiarmigen Hebels 33 mit einer Führungsstange 35 gelenkig verbunden ist, die sich zum hinteren Ende des Sitzkissens 11 hin erstreckt. Die beiden anderen Hebelarme des vorderen und hinteren Hebels 33,34 sind durch eine Koppelstange 36 miteinander verbunden, die endseitig an jedem der Hebelarme angelenkt ist. Zur Ableitung der Zwangsbewegung der Rückenlehne 12 aus der Sitzkissenvorverlagerung ist das hebelferne Ende der Führungsstange 35 mit dem Sitzkissenrahmen 13 begrenzt verschiebbar und wird nach einem vorbestimmten Verschiebeweg des Sitzkissenrahmens 13 in Fahrtrichtung gesehen derart blockiert, daß bei Weiterbewegung des Sitzkissenrahmens 13 über das Hebelgestänge 32 die Abklappbewegung der Rückenlehne 12 durchgeführt wird.

Im einzelnen ist hierzu die Führungsstange 36 mit einem quer abstehenden Führungsbolzen 37 in einer Kulisse 38 geführt, die in einem an dem Sitzkissenrahmen 13 mittels Schrauben 39 befestigten, nach unten abgekröpften Seitenblech 40 ausgebildet ist. Die Kulisse 38 erstreckt sich dabei in Längsrichtung der Sitzkissenrahmenverstellung und weist am in Fahrtrichtung gesehen hinteren Ende eine durchmessergrößere Öffnung 41 und am in Fahrtrichtung gesehen vorderen Ende eine nach unten geführte bogenförmige Krümmung 42 auf, die zum Fahrzeugboden 24 hin in einer halbkreisförmigen Nut 43 endet. Der Führungsbolzen 37 hat einen Bolzenschaft 37' und einen am freien Stirnende des Bolzenschaftes 37' über diesen radial vorstehenden Bolzenkopf 37''. Entsprechend ist die Breite der Kulisse 38 geringfügig größer bemessen als der Außendurchmesser des Bolzenschaftes 37 und die Öffnung 41 geringfügig größer als der Außendurchmesser des Bolzenkopfes 37'', so daß der Führungsbolzen 37 durch die Öffnung 41 hindurch in die Kulisse 38 eingefädelt werden kann. Die Anordnung der Kulisse 38 und ihre in Verschieberichtung des Sitzkissenrahmens 13 sich erstreckende Abmessung sind so festgelegt, daß in der in Fig. 1 zu sehenden Sitzgebrauchsposition der Führungsbolzen 37 in der Nut 43 am vorderen Ende der Kulisse 38 einliegt und bei Erreichen der Abklapposition der Rückenlehne 12 unmittelbar vor der Öffnung 41 zu liegen kommt. Der in der Nut 43 einliegende Führungsbolzen 37 wird dort mittels einer Blattfeder 44 gegen Verschiebung in der Kulisse 38 verriegelt.

Im Verschiebeweg des Sitzkissenrahmens 13 ist ein fahrzeugfester Anschlag 45 so angeordnet, daß nach einem vorgegebenen Verschiebeweg des Sitzkissenrahmens 13 in Fahrtrichtung der von der Blattfeder 44 in der Nut 43 gehaltene Führungsbolzen 37 gegen diesen Anschlag 45 anschlägt. Bei weiterer Verschiebung des Sitzkissenrahmens 13 in Fahrtrichtung wird dann von dem Anschlag 45 der Führungsbolzen 37 aus der Nut 43 ausgehoben und gleitet in die Kulisse 38, so daß sich Kulisse 38 und Führungsbolzen 37 relativ zueinander bewegen können. Der Anschlag 45 wird hier durch ein gewinkeltes Blech 46 gebildet, das mittels Schrauben 47 am Sitzunterrahmen 21 befestigt ist und sich mit seinem vom Sitzunterrahmen 21 abgewinkelten Schenkel parallel zum Seitenblech 40 mit Kulisse 38 erstreckt (Fig. 6). Auf der der Kulisse 38 zugekehrten Seite ist in dem aufgerichteten Schenkel ein sackförmiger Einschnitt 48 vorgesehen, der unter einem Anstiegswinkel von ca. 45° verläuft. Die Öffnung des Einschnitts 48 liegt im gleichen Abstand vom Sitzunterrahmen 21, den auch die Nut 43 in der Kulisse 38 vom Sitzunterrahmen 21 einnimmt. Auf diese Weise gleitet der in der Nut 43 durch die Blattfeder 44 festgelegte Führungsbolzen 37 in den Einschnitt 48 hinein und wird durch die eine Auflaufschräge 49 bildende Unterkante des Einschnitts 48 nach oben gedrückt, wobei er gegen die Kraft der Blattfeder 44 aus der Nut 43 über die Krümmung 42 in die Kulisse 38 überführt wird.

Die Abschwenkbewegung der Rückenlehne 12 beim Verschieben des Fondsitzes 10 ist in Fig. 1,3 und 4 illustriert. In der Sitzgebrauchsstellung nimmt der Fondsitz 10 die in Fig. 1 skizzierte Stellung ein. Der Führungsbolzen 37 am Ende der Führungsstange 35 ist in der am vorderen Ende der Kulisse 38 liegenden Nut 43 durch die Blattfeder 44 am Sitzkissenrahmen 13 fest verriegelt. Der Anschlag 45 steht mit Abstand vor der Kulisse 38 und dem Führungsbolzen 37 (Fig. 1). Wird nunmehr über die Griffstange 31 nach Entriegeln der Arretiervorrichtung 27 der Sitzkissenrahmen 13 des Fondsitzes 10 über dessen Verriegelungsleiste 28 in Fahrtrichtung gesehen nach vorn gezogen, so bleibt zunächst die Stellung der Rückenlehne 12 unverändert, und zwar solange, bis der in der Nut 43 verriegelte Führungsbolzen 37 an dem Anschlag 45 anschlägt. Dies ist in Fig. 3 skizziert. Zuvor wird durch die Sitzverschiebung zunächst zwischen dem hinteren Sitzende und der Fahrzeugrückwand 25 ein Freiraum geschaffen, der für die Abklappbewegung der Rückenlehne 12 erforderlich ist. Werden nunmehr die Sitzkissenrahmen 13 weiter in Fahrtrichtung bewegt, so wird über die Auflaufschräge 49 der Führungsbolzen 37 aus der Nut 43 ausgehoben und gleitet über die Krümmung 42 in die Kulisse 38. Damit kann sich die Kulisse 38 beim Weiterbewegen des Sitzkissenrahmens 13 relativ zu dem durch den Anschlag 45 fahrzeugfest festgelegten Führungsbolzen 37 verschieben. Bei der Verschiebebewegung des Sitzkissenrahmens 13 wird der Schwenklagerpunkt 50 des vorderen Hebels 33 nach vorn verlagert und infolge des festgelegten Führungsbolzens 37 an der Führungsstange 35 der Hebel 33 um seinen Schwenklagerpunkt 50 entgegen Uhrzeigersinn geschwenkt. Diese Schwenkbewegung des vorderen Schwenkhebels 33 wird über die Koppelstange 36 auf den hinteren Schwenkhebel 34 übertragen, der in Uhrzeigerrichtung gedreht wird und dadurch die Rückenlehne 12 nach unten um einen Winkel α abschwenkt. Dies ist in Fig. 4 illustriert. Der Abschwenkwinkel α der Rückenlehne 12 ist so bemessen, daß die Oberkante der Rückenlehne 12 am Ende des Verschiebewegs des Sitzkissenrahmens 13 unterhalb der Unterkante des Heckfensters 26 zum Liegen kommt.

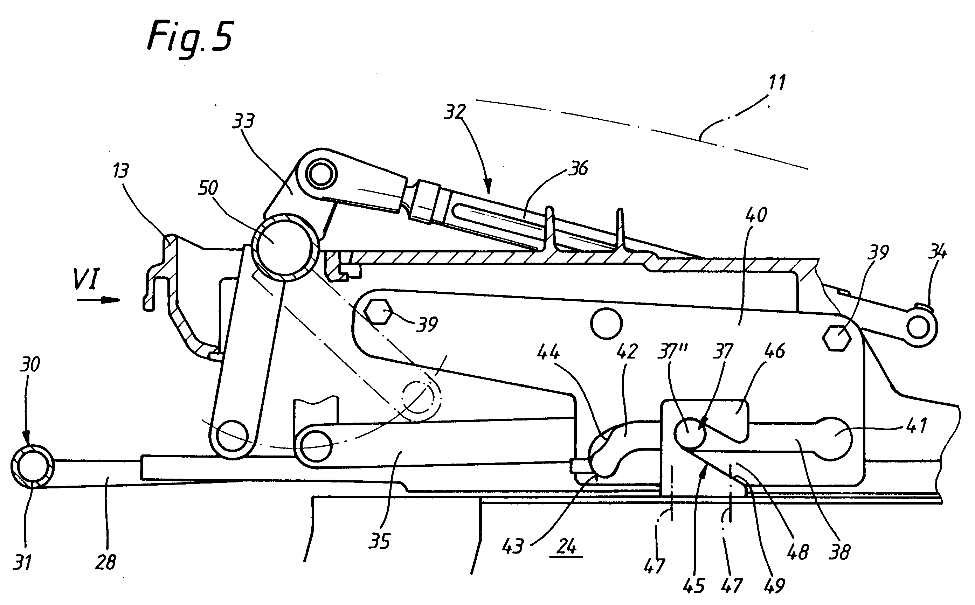

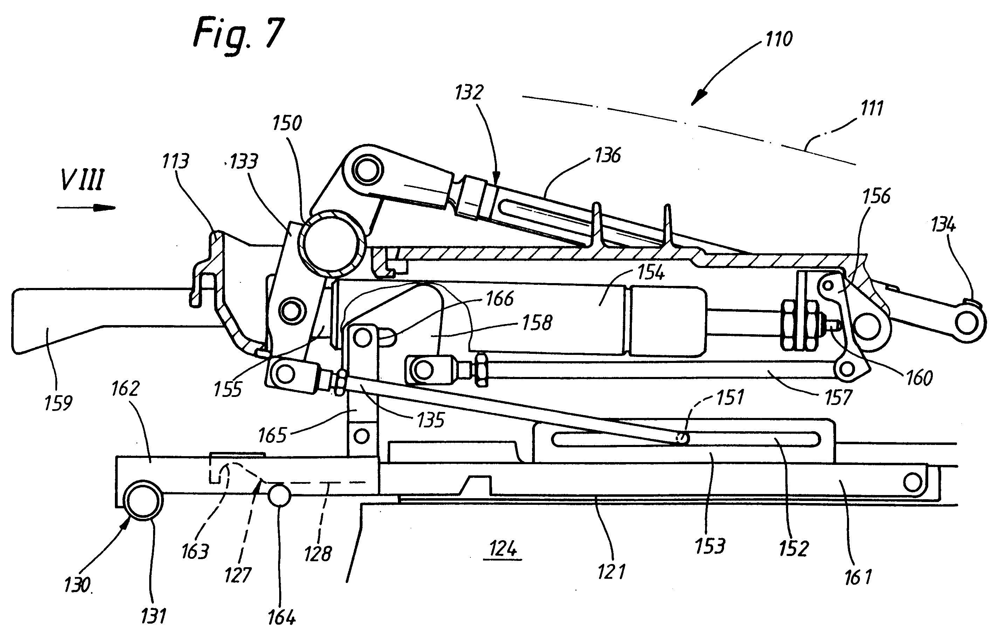

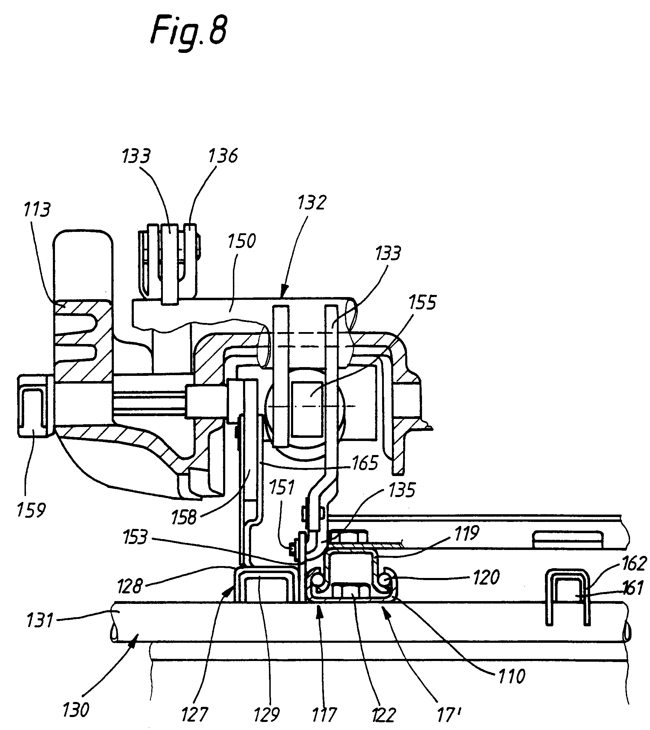

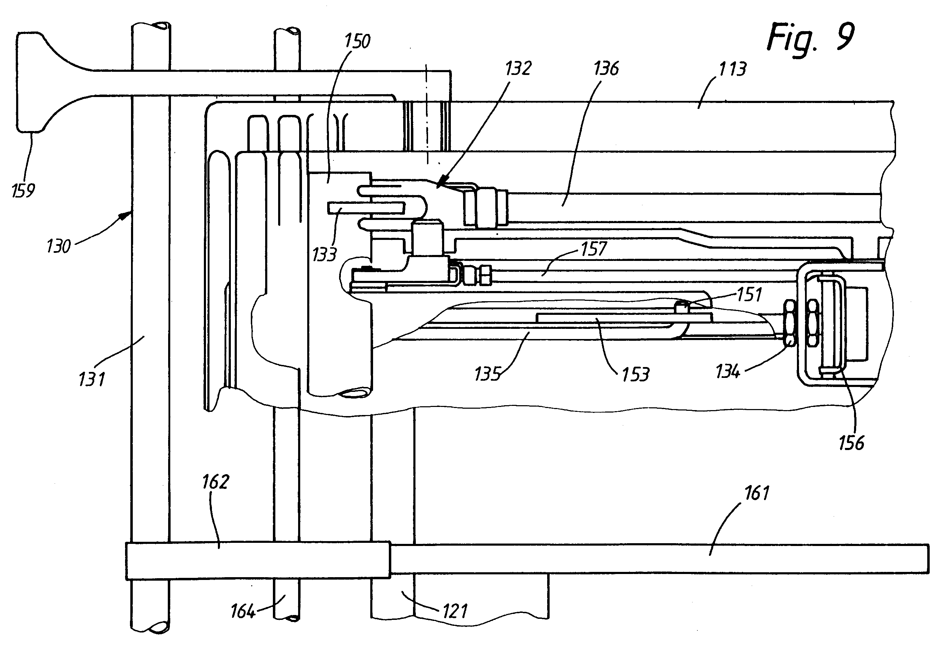

Bei der beschriebenen Fondsitzanordnung ist in der Sitzgebrauchsstellung keine Einstellmöglichkeit für den Anstellwinkel der Rückenlehne 12 zum Sitzkissen 11 vorgesehen, vielmehr hat die Rückenlehne 12 einen festen Anstellwinkel gegenüber dem Sitzkissen 11. Bei Komfortsitzen ist aber eine solche individuelle Einstellmöglichkeit der Rückenlehne 12 erwünscht. Ein solcher Fondsitz 110 ist ausschnittweise in konstruktiver Ausführung in Fig. 7 - 9 dargestellt, wobei diese Fig. nur den Bereich des Sitzkissens 111 veranschaulichen. Soweit Konstruktionselemente dieses Fondsitzes 110 mit solchen in dem vorstehend beschriebenen Fondsitz 10 übereinstimmen, sind sie mit gleichen Bezugszeichen versehen, die jedoch zur Unterscheidung um 100 erhöht sind. Wie aus Fig. 7 und 8 hervorgeht, ist der Sitzkissenrahmen 113 des Sitzkissens 111 wiederum in einer Schienenführung 117 geführt, die identisch ausgebildet ist, wie dies zu Fig. 6 beschrieben ist. Das am Sitzkissenrahmen 113 schwenkbar gehaltene Hebelgestänge 132 ist in gleicher Weise wie in Fig. 5 und 6 ausgebildet, so daß auf die dortige Beschreibung Bezug genommen wird. Wie aus Fig. 8 und 9 ersichtlich, ist an der Führungsstange 135 endseitig ein quer abstehender Führungszapfen 151 einstückig abgebogen, der in einen in gleicher Weise eine Kulisse bildenden Längsschlitz 152 in einem fahrzeugfesten Montageteil 153 hineinragt und darin geführt ist. Zur Sicherstellung einer einfachen und zeitsparenden Endmontage ist das Montageteil 153 wiederum auf dem Sitzunterrahmen 121 befestigt. Die Anordnung des Montageteils 153 und die Länge des Längsschlitz 152 sind wiederum so bemessen, daß nach einem vorgegebenen Verschiebeweg des Sitzkissenrahmens 113 der Führungszapfen 151 am in Fahrtrichtung gesehen vorderen Ende des Längsschlitzes 152 anschlägt und damit bei der Weiterbewegung des Sitzkissenrahmens 113 unveränderlich festgelegt ist. Außerdem liegt der Führungszapfen 151 in der Sitzgebrauchsposition und einem mittleren Anstellwinkel innerhalb eines möglichen Anstellwinkelbereichs der Rückenlehne 12 zum Sitzkissen 11 etwa gleich weit entfernt von beiden Enden des Längsschlitzes 152, so daß bei der Verstellung des Anstellwinkels zu der Rückenlehne 12 der Führungszapfen 151 sich im Längsschlitz 152 verschieben kann und somit die Verstellbewegung der Rückenlehne 12 nicht behindert wird. Gleichzeitig wird dadurch auch eine Verstellung des Sitzkissens 111 in verschiedene Verschiebepositionen ermöglicht.

Zur Einstellung der individuellen Rückenlehnenneigung ist eine Gasfeder 154 vorgesehen, die sich in Verschieberichtung des Sitzkissenrahmens 113 erstreckt und an diesem befestigt ist. Dessen in Fahrtrichtung am Gehäuse der Gasfeder 154 angeformter Befestigungsabschnitt 155 greift endseitig gelenkig am unteren Hebelarm des vorderen zweiarmigen Hebels 133 des Hebelgestänges 132 an, und zwar zwischen dem Schwenklagerpunkt 150 dieses Hebels 133 am Sitzkissenrahmen 113 und dem Anlenkpunkt der Führungsstange 135. Die Gasfeder 154 wird durch einen Auslösehebel 156 entsperrt, der über eine Übertragungsstange 157 mit einer am Sitzkissenrahmen 113 schwenkbar gehaltenen Gelenkplatte 158 gekoppelt ist. Die Übertragungsstange 157 ist dabei einerseits an dem einarmigen Auslösehebel 156 und andererseits an der Gelenkplatte 158 angelenkt. Mit der Lagerwelle der Gelenkplatte 158 ist ein Betätigungshebel 159 für die Rückenlehnenneigungseinstellung starr verbunden. Wird der Betätigungshebel 159 in Fig. 7 im Uhrzeigersinn geschwenkt, so wird über die Übertragungsstange 157 der Auslösehebel 156 in Fig. 7 ebenfalls im Uhrzeigersinn gedreht und betätigt dadurch einen Auslösestift 160 der Gasfeder 154. Dadurch wandert der Befestigundsabschnitt 155 nach links und der vordere Hebel 133 wird im Uhrzeigersinn geschwenkt. Durch dessen Schwenkung wird der am Sitzkissenrahmen 113 gelagerte hintere Hebel 134 entgegen Uhrzeigersinn geschwenkt und die Rückenlehne aufgerichtet, d.h. relativ zum Sizkissen 111 steiler angestellt. Soll der Anstellwinkel der Rückenlehne verringert, also der Öffnungswinkel zwischen Sitzpolster und Rückenlehnenpolster vergrößert werden, so hat der Sitzbenutzer bei gezogenem Betätigungshebel 159 und dadurch entsperrter Gasfeder 154 die Rückenlehne nach hinten zu drücken, bis er die gewünschte Neigungsstellung der Rückenlehne erreicht hat. Nach Loslassen des Betätigungshebels 159 ist die Gasfeder 154 blockiert und damit die erzielte Rückenlehnenneigung fest eingestellt.

Der in der Schienenführung 117 längsverschiebbare Sitzkissenrahmen 113 ist wiederum durch eine Arretiervorrichtung 127 in verschiedenen gewünschten Sitzpositionen verriegelbar. Die Arretiervorrichtung 127 ist in ähnlicher Weise ausgebildet wie zu Fig. 1 - 6 beschrieben. Auch hier ist wiederum ein einziger Handgriff 130 vorgesehen, mit dem alle Arretiervorrichtungen 127 aller Fondsitze 110 gleichzeitig gelöst und alle Sitzkissenrahmen 113 aller Fondsitze 110 in Fahrtrichtung nach vorn gezogen werden können, so daß im Notfall die Fondsitzanordnung sehr schnell nach vorn bewegt und die Heckfensteröffnung freigemacht werden kann. Der Handgriff 130 wird hier wiederum von einer Griffstange 131 gebildet, die sich über die quer zur Fahrtrichtung gesehene Breite der gesamten Fondsitzanordnung erstreckt. Wie aus Fig. 7 und 9 ersichtlich, ist die Griffstange 131 an mindestens zwei in Grenzen schwenk- und längsverschieblichen fahrzeugfesten Längsträgern starr befestigt. Von den Längsträgern ist in Fig. 7 und 9 nur der eine Längsträger 161 zu sehen. Er ist an seinem in Fahrtrichtung gesehenen hinteren Ende schwenkbeweglich am Sitzunterrahmen 121 gehalten und im vorderen Bereich teleskopartig ausgebildet, wobei eine im Querschnitt U-förmig Ausschiebestange 162 auf dem ebenfalls im Querschnitt U-förmigen Längsträger 161 in Grenzen längsverschiebbar geführt ist. Die Griffstange 131 ist dabei am vorderen, vom Längsträger 161 abgekehrten Ende der Ausschiebestange 162 befestigt. Der maximale Auszugsweg der Ausschiebestange 162 entspricht dabei dem maximalen Verschiebeweg des Sitzkissenrahmens 113 in der Schienenführung 117.

Die jedem Fondsitz 110 zugeordnete Arretiervorrichtung 127 weist wiederum eine mit dem Sitzkissenrahmen 113 fest verbundene Verriegelungsleiste 128 auf, an deren in Fahrtrichtung gesehen vorderem Ende ein Riegelhaken 163 ausgebildet ist (Fig. 7). An den beiden Längsträgern 161 ist eine Riegelstange 164 befestigt, die sich parallel zur Griffstange 131 über die gesamte Breite der Fondsitzanordnung erstreckt. Diese Riegelstange 164, die ebenfalls wie die Griffstange 131 an der Unterseite der Ausschiebestangen 162 befestigt ist, ist so ausgestaltet, daß sie in die Riegelhaken 163 der Verriegelungsleiste 128 einzufallen vermag, wozu diese Riegelhaken 163 nach unten geöffnet sind. Liegt die Riegelstange 164 in den Riegelhaken 163, so sind alle Verriegelungsleisten 128 starr miteinander verbunden, und durch Ziehen an der Griffstange 131 können alle Sitzkissenrahmen 113 der Fondsitze 110 nach vorn gezogen werden.

Da bei der Vorverlagerung der Sitzkissen 111 der Fondsitze 110 die Rückenlehnen abgeschwenkt werden sollen, ist es erforderlich, die Gasfedern 154 zu entsperren. Hierzu ist an jeder Verriegelungsleiste 128 ein Verbindungshebel 165 befestigt, der über eine Schlitz-Stift-Verbindung 166 an der Gelenkplatte 158 angelenkt ist. Zur Vorverlagerung der Fondsitze 110 ist die Griffstange 131 leicht anzuheben, wobei die Längsträger 161 in Fig. 7 geringfügig im Uhrzeigersinn schwenken. Dadurch hebt die an der Unterseite der Verriegelungsleisten 128 anliegende Riegelstange 164 diese an und bringt sie außer Eingriff mit den Zahnleisten 129. Die Arretiervorrichtungen 127 sind gelöst. Gleichzeitig wird über jeden Verbindungshebel 165 die jeweilige Gelenkplatte 158 in Fig. 7 im Uhrzeigersinn gedreht, wodurch die Gasfedern 154 entsperrt werden. Wird nunmehr die Griffstange 131 nach vorn bewegt, so gleitet die Riegelstange 164 in die Riegelhaken 163 an den Verriegelungsleisten 128 hinein, und alle Sitzkissenrahmen 113 der Fondsitze 110 werden zusammen nach vorn gezogen.

Durch den Verbindungshebel 165 ist der Betätigungshebel 159 zur Rückenlehnenneigungseinstellung auch mit der Arretiervorrichtung 127 des Fondsitzes 110 gekoppelt, so daß durch seine Betätigung auch die Arretiervorrichtung 127 gelöst wird. Der Sitzbenutzer hat also die Möglichkeit neben der Rückenlehneneinstellung auch die Sitzposition des Sitzkissens 11 längs der Schienenführung 117 zu verändern.

## Patentansprüche

1. Fondsitzanordnung für Omnibusse mit mindestens zwei Fondsitzen, die jeweils ein Sitzkissen mit in Fahrtrichtung mittels Schienenführung vorverlagerbarem Sitzkissenrahmen und eine mit dem Sitzkissenrahmen schwenkbeweglich verbundene, bei Sitzkissenvorverlagerung in Richtung einer mehr horizontalen Erstreckung abklappende Rückenlehne aufweisen,
**dadurch gekennzeichnet,**
daß die Rückenlehne (12) über ein am Sitzkissenrahmen (13;113) schwenkbeweglich gehaltenes Hebelgestänge (32;132) mit einer Führungsstange (35;135) gelenkig verbunden ist, deren hebelfernes Ende mit dem Sitzkissenrahmen (13;113) wegbegrenzt verschiebbar ist und nach einem vorbestimmten Verschiebeweg des Sitzkissenrahmens (13;113) durch einen fahrzeugfesten Anschlag (45;153) in Fahrtrichtung derart blockiert wird, daß bei Weiterbewegung des Sitzkissenrahmens (13;113) über das Hebelgestänge (32;132) die Abklappbewegung der Rückenlehne (12) erzwungen wird, daß an jedem Fondsitz (10,10',10'';110) eine Arretiervorrichtung (27;127) zur ortsfesten Verriegelung des Sitzkissenrahmens (13;113) in der fahrzeugfesten Schienenführung (17;117) vorhanden ist und daß ein Handgriff (30;130) vorgesehen ist, der spätestens mit seiner Betätigung mit den Sitzkissenrahmen (13;113) der Fondsitze (10,10',10'';110) so verbunden ist, daß er einerseits alle Arretiervorrichtungen (27;127) zu lösen und andererseits eine Verschiebekraft auf die Sitzkissenrahmen (13;113) aufzubringen vermag.

2. Anordnung nach Anspruch 1,
**dadurch gekennzeichnet,**
daß das Hebelgestänge (32;132) zwei jeweils am in Fahrtrichtung gesehen vorderen und hinteren Ende des Sitzkissenrahmens (13;113) schwenkbar gehaltene zweiarmige Hebel (33,34;133,134) aufweist, daß der eine Hebelarm des hinteren Hebels (34;134) fest mit der Rückenlehne (12) und der eine Hebelarm des vorderen Hebels (33;133) gelenkig mit der Führungsstange (35;135) verbunden ist und daß die Hebel (33,34;133,134) über eine an ihren anderen Hebelarmen angelenkte Koppelstange (36;136) miteinander verbunden sind.

3. Anordnung nach Anspruch 1 oder 2,
**dadurch gekennzeichnet,**
daß die Führungsstange (35) einen quer abstehenden Führungsbolzen (37) trägt, der in einer sitzkissenrahmenfesten, sich in Sitzverschieberichtung erstreckenden Kulisse (38) geführt und in der Sitzgebrauchsposition am in Fahrtrichtung gesehen vorderen Kulissenende liegend in der Kulisse (38) gegen Verschiebung gesperrt ist, und daß im Verschiebeweg des Sitzkissenrahmens (13) der fahrzeugfeste Anschlag (45) so angeordnet ist, daß nach einem vorgegebenen Verschiebeweg des Sitzkissenrahmens (13) in Fahrtrichtung die Sperrung des Führungsbolzens (37) in der Kulisse (38) aufgehoben und der Führungsbolzen (37) am Anschlag (45) gegen Verschiebung in Fahrtrichtung festgelegt ist.

4. Anordnung nach Anspruch 3,
**dadurch gekennzeichnet,**
daß die Sperrung des Führungsbolzens (37) durch eine Blattfeder (44) bewirkt wird, die den Führungsbolzen (37) in eine am vorderen Ende der Kulisse (38) ausgebildete, nach unten geschlossene Nut (43) hineindrückt.

5. Anordnung nach Anspruch 4,
**dadurch gekennzeichnet,**
daß der Anschlag (45) eine Auflaufschräge (49) aufweist, die so ausgebildet ist, daß der Führungsbolzen (37) beim Auflaufen am Anschlag (45) gegen die Kraft der Blattfeder (44) aus der Nut (43) ausgehoben wird.

6. Anordnung nach Anspruch 1 oder 2,
**dadurch gekennzeichnet,**
daß die Führungsstange (135) mit einem quer abstehenden Führungszapfen (151) in einem fahrzeugfesten Längsschlitz (152), der sich parallel zur Schienenführung (127) erstreckt, verschieblich geführt ist, und daß der Längsschlitz (152) so bemessen ist, daß nach einem vorgegebenen Verschiebeweg des Sitzkissenrahmens (113) in Fahrtrichtung der Führungszapfen (151) an dem in Fahrtrichtung gesehen vorderen Ende des Längsschlitzes (152) anschlägt.

7. Anordnung nach Anspruch 6, bei welchem der Anstellwinkel der Rückenlehne relativ zum Sitzkissen einstellbar ist,
**dadurch gekennzeichnet,**
daß der Längsschlitz so bemessen ist, daß in einer Sitzgebrauchsposition, in welcher das in Fahrtrichtung gesehene hintere Sitzkissenende nächstmöglich zur Fahrzeugrückwand liegt und die Rückenlehne am steilsten angestellt ist, der Führungszapfen (151) noch nicht oder gerade eben an dem in Fahrtrichtung gesehen hinteren Ende des Längsschlitzes anliegt und daß am vorderen zweiarmigen Hebel (133) des Hebelgestänges (132) zwischen Schwenklagerpunkt (150) des Hebels (133) und dem Anlenkpunkt der Führungsstange (136) ein am Sitzkissenrahmen (113) gehaltenes, in Fahrtrichtung verschiebbares Verstellglied (Gasfeder 154) angreift.

8. Anordnung nach Anspruch 7,
**dadurch gekennzeichnet,**
daß das Verstellglied vom längsverschieblichen Befestigungsabschnitt (153) einer Gasfeder (154) gebildet ist, die durch einen Betätigungshebel (159) zur Einstellung der Rückenlehnenneigung auslösbar ist.

9. Anordnung nach Anspruch 8,
**dadurch gekennzeichnet,**
daß der Betätigungshebel (159) so mit der Arretiervorrichtung (127) des Fondsitzes (110) gekoppel ist, daß während seiner Betätigung zur Rückenlehneneinstellung die Verriegelungswirkung der Arretiervorrichtung (127) aufgehoben ist.

10. Anordnung nach Anspruch 9,
**dadurch gekennzeichnet,**
daß die Arretiervorrichtung (127) so mit dem Betätigungshebel (159) für die Rückenlehneneinstellung gekoppelt ist, daß während ihres Lösens durch den Handgriff (130) der Betätigungshebel (159) zur Auslösung der Gasfeder (154) betätigt ist.

11. Anordnung nach einem der Ansprüche 1 - 10,
**dadurch gekennzeichnet,**
daß jede Arretiervorrichtung (27;127) eine sich parallel zu der Schienenführung (17;117) erstreckende, sitzkissenrahmenfeste Verriegelungsleiste (28;128) aufweist, die mindestens in der Sitzgebrauchsposition des Fondsitzes (10,10',10'';110) verriegelbar ist, und daß der Handgriff (30;130) als eine quer zur Verschieberichtung der Fondsitze (10,10',10'';110) über deren Gesamtbreite sich erstreckende Griffstange (31;131) ausgebildet ist, die starr oder koppelbar mit den Verriegelungsleisten (28;128) verbunden ist.

12. Anordnung nach Anspruch 11,
**dadurch gekennzeichnet,**
daß die Griffstange (31) mit allen Verriegelungsleisten (28) an deren in Fahrtrichtung gesehen vorderem Ende unlösbar verbunden ist.

13. Anordnung nach Anspruch 11,
**dadurch gekennzeichnet,**
daß die Griffstange (131) an mindestens zwei in Grenzen schwenk- und längsverschieblichen fahrzeugfesten Längsträgern (161) starr befestigt ist, die sich in Sitzverschieberichtung im Parallelabstand voneinander erstrecken, daß eine parallel zur Griffstange (131) sich über die Gesamtbreite der Fondsitze (110) erstreckende Riegelstange (164) an den beiden Längsträgern (161) befestigt ist und daß jede Verriegelungsleiste (128) an ihrem in Fahrtrichtung gesehen vorderen Ende einen nach unten offenen Riegelhaken (163) zum Einfallen der Riegelstange (164) bei deren Längsverschiebung trägt.

14. Anordnung nach Anspruch 9 oder 10 und Anspruch 11 oder 13,
**dadurch gekennzeichnet,**
daß an jeder Verriegelungsleiste (128) ein Verbindungshebel (165) befestigt ist, der mit dem Betätigungshebel (129) gekoppelt ist.

15. Anordnung nach Anspruch 14,
**dadurch gekennzeichnet,**
daß der Betätigungshebel (159) schwenkbar gelagert und drehfest mit einer Gelenkplatte (158) verbunden ist, an welcher einerseits eine die Gasfeder (154) auslösende Übertragungsstange (157) und andererseits mittels einer Stift-Schlitz-Führung (166) der an der Verriegelungsleiste (128) befestigte Verbindungshebel (165) angelenkt ist.

## Claims

1. A back seat arrangement for omnibuses with at least two back seats each of which comprises a seat cushion with a seat cushion frame which can be displaced forwardly in the direction of travel by means of guide rails and comprising, connected to the seat cushion frame and adapted to be pivotally movable, a back rest which, upon forwards displacement of the seat cushion, folds down in the direction of a more horizontal alignment, characterised in that the back rest (12) is articulatingly connected to a guide rod (35; 135) via a lever linkage (32; 132) supported on the seat cushion frame (13; 113) for pivoting movement and of which the end remote from the lever is adapted for limited displacement with the seat cushion frame (13; 113) and which, after a predetermined displacement of the seat cushion frame (13; 113) becomes so locked in the direction of travel by an abutment (45; 153) rigid with the vehicle that upon further movement of the seat cushion frame (13; 113) via the lever linkage (32; 132) the downwards movement of the back rest (12) is induced in that there is on each back seat (10, 10', 10''; 110) a locking device (27; 127) for the stationary locking of the seat cushion frame (13; 113) in the guide rails (17; 117) rigid with the vehicle and in that a handle (30; 130) is provided which, no later than when it is actuated, is so connected to the seat cushion frame (13; 113) of the back seats (10, 10', 10''; 110) that on the one hand it is capable of releasing all the locking devices (27; 127) and on the other of applying a displacement force to the seat cushion frame (13; 113).

2. An arrangement according to claim 1, characterised in that the lever linkage (32; 132) has two two-armed levers (33, 34; 133, 134) pivotally supported on the (viewed in the direction of travel) front and rear ends of the seat cushion frame (13; 113) and in that one lever arm of the rear lever (34; 134) is rigidly connected to the back rest (12) and one lever arm of the front lever (33; 133) is articulatingly connected to the guide rod (35; 135) and in that the levers (33, 34; 133, 134) are connected to one another via a coupling rod (36; 136) articulated on their other lever arms.

3. An arrangement according to claim 1 or 2, characterised in that the guide rod (35) carries a transversely projecting guide bolt (37) which is guided in a slotted link (38) extending in the direction of seat displacement and in the position of seat usage is locked against displacement in the slotted link (38) at the end of the slotted link which is in front, looking in the direction of travel, and in that in the displacement path of the seat cushion frame (13), the abutment (45) rigid with the vehicle is so disposed that after a given displacement of the seat cushion frame (13) in the direction of travel the locking of the guide bolt (37) in the slotted link (38) is cancelled out and the guide bolt (37) is, at the abutment (45), fixed against displacement in the direction of travel.

4. An arrangement according to claim 3, characterised in that the locking of the guide bolt (37) is brought about by a leaf spring (44) which presses the guide bolt (37) into a closed-bottomed groove (43) constructed at the front end of the slotted link (38).

5. An arrangement according to claim 4, characterised in that the abutment (45) comprises a run-on ramp (49) which is so constructed that during run-on, the guide bolt (37) is, at the abutment (45), lifted out of the groove (43) against the force of the leaf spring (44).

6. An arrangement according to claim 1 or 2, characterised in that the guide rod (135) is guided for displacement by means of a transversely projecting guide journal (151) engaging a longitudinal slot (152) rigid with the vehicle and which extends parallel with the guide rail (127) and in that the longitudinal slot (152) is so dimensioned that after a given displacement of the seat cushion frame (113) in the direction of travel, the guide journal (151) abuts that end of the longitudinal slot (152) which is at the front, looking in the direction of travel.

7. An arrangement according to claim 6, in which the angle of incidence of the back rest in relation to the seat cushion is adjustable, characterised in that the longitudinal slot is so dimensioned that in a position of seat usage in which the (viewed in the direction of travel) rear end of the seat cushion is as close as possible to the rear wall of the vehicle and the back rest is set at its steepest, the guide journal (151) is still not or is just at the (in the direction of travel) rear end of the longitudinal slot and in that a displacement member (gas spring 154) adapted for displacement in the direction of travel and supported on the seat cushion frame (113) engages the front two-armed lever (133) of the lever linkage (132) between the pivot point (15)of the lever (133) and the point of articulation of the guide rod (136).

8. An arrangement according to claim 7, characterised in that the displacement member is constituted by the longitudinally displaceable fixing portion (155) of a gas spring (154) which can be released by an actuating lever (159) for adjustment of the back rest rake.

9. An arrangement according to claim 8, characterised in that the actuating lever (159)is so coupled to the locking device (127) of the back seat (110) that while it is being actuated to adjust the back rest the locking effect of the locking device (127) is disabled.

10. An arrangement according to claim 9, characterised in that the locking device (127)is so coupled to the actuating lever (159) for the back rest adjustment that while it is released by the handle (130) the actuating lever (159) for releasing the gas spring (154) is actuated.

11. An arrangement according to one of claims 1 to 10, characterised in that each locking device (27; 127) has a locking strip (28; 128) rigid with the seat cushion frame and extending parallel with the guide rails (17; 117) and which can be locked at least in the position of seat usage of the back seat (10, 10', 10''; 110) and in that the handle (30; 130) is constructed as a grip rod (31; 131) extending over the entire width of and crosswise to the direction of displacement of the back seats (10, 10', 10''; 110) and which is rigidly connected or can be coupled to the locking strips (28; 128).

12. An arrangement according to claim 11, characterised in that the grip rod (31) is inseparably connected to all locking strips (28) at their end which is in front in the direction of travel.

13. An arrangement according to claim 11, characterised in that the grip rod (131) is rigidly fixed on two longitudinal members (161) rigid with the vehicle and adapted for pivoting and longitudinal displacement within limits and which extend parallel with and at a distance from each other in the direction of seat displacement and in that a locking bar (164) which extends parallel with the grip rod (131) and over the total width of the back seats (110) is fixed on the two longitudinal members (161) and in that each locking strip (128) has at its (viewed in the direction of travel) front end a downwardly open locking hook (163) into which the locking bar (164) can drop upon longitudinal displacement.

14. An arrangement according to claim 9 or 10 and claim 11 or 13, characterized in that there is fixed on each locking strip (128) a connecting lever (165) which is coupled to the actuating lever (129).

15. An arrangement according to claim 14, characterised in that the actuating lever (159) is pivotably mounted and is rotationally rigidly connected to a hinge plate (158) on which there is articulated firstly a transmission rod (157) which triggers the gas spring (154) and secondly, by means of a pin-and-slot guide (166), the connecting lever (165) which is fixed on the locking strip (128).

## Revendications

1. Configuration de sièges arrière pour autobus ayant au moins deux sièges arrière, qui présentent chacun un coussin d'assise, avec un cadre de coussin pouvant être avancé dans le sens de la marche au moyen d'un rail de guidage, et un dossier, relié de façon à pivoter au cadre de coussin, se rabattant quand le coussin est avancé dans la direction d'une projection plutôt horizontale, caractérisée en ce que le dossier (12) est relié de façon articulée par l'intermédiaire d'une tringlerie à levier (32;132), maintenue de façon à pivoter sur le cadre de coussin (13;113), à une barre de guidage (35;135), dont l'extrémité éloignée du levier est mobile dans le cadre de coussin (13;113) sur une course limitée, et est bloqué dans le sens de la marche à l'issue d'une trajectoire de déplacement prédéterminée du cadre de coussin (13;113), par une butée (45;153) fixée au véhicule, de telle sorte que lorsque le cadre de coussin (13;113) est déplacé plus loin, le mouvement de rabattement du dossier (12) est imposé par l'intermédiaire de la tringlerie à levier (32;132), en ce que sur chaque siège arrière (10,10',10'';110), il existe un dispositif d'arrêt (27;127) pour le verrouillage fixe du cadre de coussin (13;113) dans le rail de guidage (17;117) fixé au véhicule, et en ce qu'une poignée (30;130) est prévue, qui est reliée, au plus loin de son actionnement, aux cadres de coussin (13;113) des sièges arrière (10,10',10'';110), de telle sorte qu'elle permet d'une part de libérer tous les dispositifs d'arrêt (27;127) et d'autre part, d'exercer une force de déplacement sur les cadres de coussin (13;113).

2. Configuration selon la revendication 1, caractérisée en ce que la tringlerie à levier (32;132) présente deux leviers à double bras (33,34;133,134), chacun maintenu de façon à pivoter au niveau de l'extrémité avant et arrière du cadre de coussin (13;113), vu dans le sens de la marche, en ce que l'un des bras de levier du levier arrière (34;134) est relié solidement au dossier (12), et l'un des bras de levier du levier avant (33;133) est relié de façon articulée à la barre de guidage (35;135), et en ce que les leviers (33,34;133,134) sont reliés entre eux par l'intermédiaire d'une barre de couplage (36;136) articulée au niveau de leurs autres bras de levier.

3. Configuration selon la revendication 1 ou 2, caractérisée en ce que la barre de guidage (35) supporte un boulon de guidage (37) s'éloignant transversalement, qui est guidé dans une coulisse (38), fixée sur le cadre de coussin et s'étendant dans la direction de déplacement du siège, et bloqué dans la position d'utilisation du siège dans la coulisse (38) contre tout déplacement, le bouton se trouvant à l'extrémité avant, vue dans le sens de la marche, et en ce que sur la course de déplacement du cadre de coussin (13) est agencée une butée (45) fixée au véhicule, de telle sorte qu'à l'issue d'une course de déplacement prédéterminée du cadre de coussin (13) dans le sens de la marche, le verrouillage du bouton de guidage (37) dans la coulisse (38) est éliminé et le bouton de guidage (37) est bloqué au niveau de la butée (45) contre tout déplacement dans le sens de la marche.

4. Configuration selon la revendication 3, caractérisée en ce que le verrouillage du bouton de guidage (37) est réalisé par un ressort à lames (44), qui pousse le bouton de guidage (37) dans une rainure (43), fermée par le bas, réalisée à l'extrémité avant de la coulisse (38).

5. Configuration selon la revendication 4, caractérisée en ce que la butée (45) présente un plan incliné d'arrêt (49), qui est formé de telle sorte que le bouton de guidage (37), lorsqu'il s'arrête contre la butée (45), est sorti de la rainure (43) contre la force du ressort à lames (44).

6. Configuration selon la revendication 1 ou 2, caractérisée en ce que la barre de guidage (135) avec un cône de guidage (151) s'éloignant transversalement, est guidée de façon mobile dans une fente longitudinale (152) fixée au véhicule, s'étendant parallèlement au rail de guidage (127), et en ce que ta fente longitudinale (152) est proportionnée de sorte qu'à l'issue d'une course de déplacement prédéterminée du cadre de coussin (113) dans le sens de la marche, le cône de guidage (151) bute contre l'extrémité avant de la fente longitudinale (152), vue dans le sens de la marche.

7. Configuration selon la revendication 6, dans laquelle l'angle d'incidence du dossier par rapport au coussin est réglable, caractérisée en ce que la fente longitudinale est proportionnée de telle sorte que dans une position d'utilisation du siège, où l'extrémité arrière du coussin, vue dans te sens de la marche, se trouve la plus proche possible de la paroi arrière du véhicule et où te dossier est positionné de la façon la plus droite, le cône de guidage (151) ne se situe pas encore ou tout juste à l'extrémité arrière de la fente longitudinale, vue dans le sens de la marche, et en ce qu'au niveau du levier à double bras (133) avant de la tringlerie à levier (132), entre le point de pivotement (150) du levier (133) et le point d'articulation de la barre de guidage (136), s'engage un élément de réglage (ressort pneumatique 154), maintenu au niveau du cadre de coussin (113) et mobile dans le sens de la marche.

8. Configuration selon la revendication 7, caractérisée en ce que l'élément de réglage est formé par ta section de fixation (155), mobile dans la direction longitudinale, d'un ressort pneumatique (154), qui peut être actionné par l'intermédiaire d'un levier de commande (159) pour le réglage de l'inclinaison du dossier.

9. Configuration selon la revendication 8, caractérisée en ce que le levier de commande (159) est couplé au dispositif d'arrêt (127) du siège arrière (110) de telle sorte que pendant qu'il est actionné pour régler le dossier, l'effet de verrouillage du dispositif d'arrêt (127) est annulé.

10. Configuration selon la revendication 9, caractérisée en ce que le dispositif d'arrêt (127) est couplé au levier de commande (159) pour le réglage du dossier de telle sorte que pendant qu'il est libéré par l'intermédiaire de la poignée (130), le levier de commande (159) est actionné pour déclencher le ressort pneumatique (154).

11. Configuration selon l'une quelconque des revendications 1 à 10, caractérisée en ce que chaque dispositif d'arrêt (27;127) présente une barrette de verrouillage (28;128), s'étendant parallèlement au rail de guidage (17;117) et fixée sur le cadre de coussin, barrette qui est au moins verrouillable dans la position d'utilisation du siège du siège arrière (10,10',10'';110), et en ce que la poignée (30;130) est réalisée comme une barre de maintien (31;131) qui s'étend en travers de la direction de déplacement des sièges arrière (10,10',10'';110) sur toute la largeur, et qui est reliée aux barrettes de verrouillage (28;128) de façon rigide ou de façon à pouvoir être couplée.

12. Configuration selon la revendication 11, caractérisée en ce que la barre de maintien (31) est reliée à toutes les barrettes de verrouillage (28) à leur extrémité avant, vue dans le sens de la marche, de façon inséparable.

13. Configuration selon la revendication 11, caractérisée en ce que la barre de maintien (131) est fixée de façon rigide sur au moins deux supports longitudinaux (161), mobiles par pivotement et dans la direction longitudinale de façon limitée et fixés au véhicule, qui s'étendent à une distance parallèle l'un de l'autre dans la direction de déplacement du siège, en ce qu'une barre de verrouillage (164), s'étendant en parallèle à la barre de maintien (131) sur toute la largeur des sièges arrière (110) est fixée sur les deux supports longitudinaux (161), et en ce que chaque barrette de verrouillage (128) supporte à son extrémité avant, vue dans le sens de la marche, un crochet de verrouillage (163) ouvert vers le bas, pour l'engagement de la barre de verrouillage (164) lorsqu'elle est déplacée dans la direction longitudinale.

14. Configuration selon la revendication 9 ou 10 et la revendication 11 ou 13, caractérisée en ce que sur chaque barrette de verrouillage (128) est fixé un levier de connexion (165) qui est couplé au levier de commande (129).

15. Configuration selon la revendication 14, caractérisée en ce que le levier de commande (159) est situé de façon à pivoter et relié de façon non-rotative à une plaque articulée (158), sur laquelle sont articulés, d'une part une barre de transmission (157) déclenchant le ressort pneumatique (154), et d'autre part te levier de connexion (165) fixé sur la barrette de verrouillage (128) par l'intermédiaire d'un guidage à tige et fente (166).
